# EUROPEAN PATENT APPLICATION

(11) **EP 3 828 863 A1**
(43) Date of publication of application: **02.06.2021**
(21) Application number: 20187018.5
(22) Date of filing: 21.07.2020
(51) Int. Cl.: G08G 1/00, G06Q 10/02, G06Q 10/06

(54) **METHOD AND SYSTEM FOR PROVIDING MOBILITY SERVICE BASED ON AUTONOMOUS DRIVING VEHICLE**

(30) Priority: 28.11.2019 KR 20190155614
(71) Applicant: KSEEK CO., LTD., Daejeon 34127 (KR)
(72) Inventor: KIM, Young-Real, 34127 Daejeon (KR)
(74) Representative: Ter Meer Steinmeister & Partner

(57) **Abstract**

The present invention relates to a method and system for providing a mobility service that moves the users belonging to a group such as a school, a public institution, a local government, or a company to a destination using a vehicle (especially, an autonomous driving vehicle). Each organization having a usage limit of the mobility service pays contributions, prepayment fees, or membership fees to the mobility service provider and is granted the usage limit of the mobility service in order to efficiently provide the mobility service to users thereof. The server in charge of the mobility service receives the request of the mobility service from the user of the organization and provides the mobility service within the usage limit of the user group. In another method of providing the mobility service as a deferred payment system, the server preemptively provides the mobility services at the request of each user, and then charges the usage fee to each user or user's organization for the provided mobility service. This postpaid mobility service method usually sets the cost somewhat higher than the prepaid system, thereby inducing the user group to more actively collect funds, pay membership fees, or prepayment fees. In order to provide a more efficient mobility service, an A2A sharing mobility service is proposed to reduce traffic congestion. A2A allows a plurality of users to request a mobility service including origin and destination, so that people with similar departure and arrival destinations are first shared, thereby moving from a specific region to a specific region at a time. When a large number of people share, it is processed in such a way that the amount of usage is calculated by considering the distance or time traveled by each user, and a fee is charged to the organization of each member or the amount of usage is deducted.

## Description

### Technical Field

The present invention relates to a service method and system for enabling groups, such as companies, government offices, organizations, or the like to which a plurality of users belong to share a vehicle and providing a mobility service to users belonging to the groups using the service based on a plurality of autonomous driving vehicles and a server.

In more detail, the present invention relates to a service method and system in which a server registers a plurality of groups, registers a plurality of users to a specific group, provides a mobility service to the users belonging to the specific group by using an autonomous driving vehicle within a usage limit assigned to the specific group, and charges the specific group for a usage fee of a specific user.

In addition, the present invention relates to a service method and system for collectively purchasing or renting an autonomous driving vehicle by collecting funds from a plurality of users or groups, and providing a mobility service to an individual user belonging to the group using the autonomous driving vehicle.

Vehicles are continuously evolving from the existing human driving type to an autonomous driving vehicle capable of autonomous driving. When the autonomous driving vehicles without human driving emerge, it is predicted that there will be a great change not only in the transportation system but also in people's lifestyle.

The autonomous driving vehicles are divided into six levels from level 0 to level 5. Level 4 and level 5 are classified as Highly Autonomous Vehicles (HAV), which can be operated without the driver's intervention, and are expected to be commercialized from 2020 or 2025.

### Background Art

There is a car sharing service or a ride sharing service as a conventional technology. As for the ride sharing service, services such as Uber, Grab, Didi Chuxing, and Kakao T have been successfully established and operated in the market.

The conventional technology is provided in such a manner that a request for a user who wants a mobility service is opened to a driver who owns a vehicle and a specific driver uses his vehicle to move the user to a desired location.

The user accurately predicts and pays the price for the mobility service and the company of operating the mobility service platform conducts a business in a manner that charges a fee for matching.

Since 2010, a competition for autonomous driving vehicle without a driver has been fierce in countries around the world. When autonomous vehicles become widespread, it is predicted that the change from the form in which individuals purchase vehicles to the form in which vehicles are jointly purchased and used together will be generated.

Currently, most vehicles are reported to be waiting in the parking lot except for about 5% of the driving time by means of the driver. When the autonomous driving vehicles that do not require drivers are supplied, it is expected that the waiting time in most parking lots will be reduced and it will be driven to move more people.

Waymo, which is an American company, have been produced a level 4 autonomous vehicle and started a human-free robot taxi business in Phoenix since 2018.

The autonomous driving vehicles are expected to increase in price because they are equipped with rider sensors, radar sensors, and optical sensors, and must have autonomous driving systems.

In addition, the autonomous driving vehicles can provide mobility services to more people than existing vehicles, so that, instead of purchasing vehicles individually by users, it is expected that a number of users or organizations will share the vehicle thereof and expand the services used together.

According to some predictions, it is reported that the sharing service will be popular in that individuals purchase autonomous vehicles, use autonomous vehicles according to individual needs, and pick up others for the rest of the time and receive fees for it.

The government and local governments provide public transportation such as buses and trains for the handicapped and provide tax support. In particular, in areas where traffic demand is very low because people do not live much, taxes are still provided for public transportation.

Various companies and organizations operate shuttle buses for commuting by employees. However, such a shuttle bus is difficult to operate unless it is a large company or group, and if there are not many employees, there is a side that is excluded from the operation route of the shuttle bus.

### Disclosure

### Technical Question

Conventional ride sharing or vehicle sharing platform technology is classified as a similar taxi business using a vehicle that does not receive a taxi service permission, and is thus in social conflict. In the United States and South Korea, the price of personal taxi licenses has plummeted, and individual taxi operators have faced considerable resistance, such as suicide or group opposition.

The platform services such as Uber and Grab are similar taxi businesses that use privately owned cars or motorcycles by ordinary users. The business is developed in such a manner that it does not own the vehicle jointly, receives a fee corresponding to the fare, and the platform takes the fee.

When the government or local governments operate public transportation such as buses and trains with tax support, labor and fuel costs account for about 80%.

The initial purchase cost of autonomous driving vehicles is higher than that of existing vehicles. Therefore, it is wasteful for the user who owns the autonomous driving vehicle to leave the autonomous driving vehicle outside of the usage time, so that it is necessary to have the autonomous driving vehicle jointly owned by several people or organizations or to develop a platform technology that provides mobility services with a large number of autonomous driving vehicles to group users.

In addition, if the autonomous vehicles are to be supplied at high prices, it seems unlikely that people who purchase expensive autonomous vehicles will be allowed to use their vehicles to an unspecified number of people who do not know at all.

An object of the present invention is to jointly prepare an autonomous driving vehicle more easily and provide a convenient mobility service to users belonging to a group by using the vehicle.

### Technical solution

The present invention provides a method and system for providing a mobility service of an autonomous driving vehicle in which multiple persons or groups can share multiple vehicles and a mobility service is efficiently provided to service users in preparation for the era of autonomous driving vehicles.

The method and system for providing a mobility service of the autonomous driving vehicle may be implemented by figuring out mobility service demand of each individual and comprising a server that performs optimal matching for boarding the autonomous driving vehicle, a user terminal that requests the mobility service to each user, and an autonomous driving vehicle that provides the mobility service to the user at the server's request.

The server selectively receives information including the user's start area and destination area information and whether or not car sharing is possible, and a limit value according to a required time exceeded due to car sharing and designs boarding and deboarding schedules of the user.

The server registers a number of companies, local governments, or schools as a mobility service user group and specifies a number of users as belonging to a specific group.

The user group pays contributions to use the mobility service and has a usage limit that can be used for the mobility service. The usage limit may be allocated as a specific usage limit by the contribution, and the server manages the usage limit.

The server provides the mobility service while managing the usage limit of the mobility service for each user and group.

The server specifies a usage limit that can be used by a specific user for a plurality of users belonging to a specific group, and provides a mobility service only within the total usage limit of the specific group and the usage limit of the specific user.

Each user uses a user terminal to request a mobility service. When the user specifies a start area and a destination area and requests the mobility service, the user terminal transmits request information to the server.

The server receives the request information from the user terminal and searches for an optimal autonomous driving vehicle capable of providing a suitable mobility service. The server instructs the autonomous driving vehicle to provide a mobility service to a specific user.

The autonomous driving vehicle proposes a method and system for providing an autonomous driving vehicle mobility service in a manner of providing the mobility service to users.

The present invention proposes a method of jointly purchasing or renting an autonomous driving vehicle by attracting funds from a plurality of users, and providing an effective mobility service to the users through the autonomous driving vehicle as a common asset.

The present invention proposes a method of jointly purchasing, renting, or managing an autonomous driving vehicle by receiving contributions or prepayment fees from a plurality of use groups, and providing an effective mobility service to the users of the group by using the autonomous driving vehicle.

In one aspect a method is provided for providing a mobility service to multiple groups and multiple users subscribing to each of the groups, comprising: receiving, by a server, a request for the mobility service from a user terminal of a specific user of a specific group; instructing, by the server, a specific autonomous driving vehicle to provide the mobility service; and providing, by the specific autonomous driving vehicle, the mobility service to the specific user, wherein the server provides the mobility service to the specific group or the specific user within a usage limit.

In some or more embodiments, the method may further comprise assigning, by the server, the usage limit to a specific individual user or a specific group according to a contribution, prepayment fee, or membership fee paid by the specific group.

In some or more embodiments, the method may further comprise dividing, by the server, the usage limit of the specific group for the mobility service into usage limits of users of the specific group and assigning the usage limits to the users.

In some or more embodiments, the method may further comprise transferring, by the server, some or all of the usage limit of the specific group or the specific user to another user or another group.

In some or more embodiments, the method may further comprise calculating, by the server, a usage amount of a mobility service provided to a specific user in consideration of at least one of a usage time of the mobility service, a delay time due to car sharing, a number of car sharing passengers, a traveling distance, a traveling section, a congestion degree, or a usage time band.

In some or more embodiments, the server may receive requests for a mobility service from a plurality of user terminals in which a respective start area and a respective destination area are indicated and perform matching for the mobility service such that a plurality of users board a specific autonomous driving vehicle together and travel.

In some or more embodiments, the method may further comprise providing, by the server, usage information of users for the mobility service belonging to the specific group to a specific user specified as a manager of the specific group.

In some or more embodiments, the server may receive requests for a mobility service from a plurality of user terminals in which a respective start area and a respective destination area are indicated and provides a mobility service such that a plurality of users board a specific autonomous driving vehicle together, and preferentially matches those who have requested a mobility service corresponding to a start area of a certain range and an destination area of a certain range.

In another aspect a method is provided for providing a mobility service to multiple groups and multiple users subscribing to each of the groups, comprising: receiving, by a server, a request for the mobility service from a user terminal of a specific user of a specific group; instructing, by the server, a specific autonomous driving vehicle to provide the mobility service; and providing, by the specific autonomous driving vehicle, the mobility service to the specific user, wherein the server charges the specific group for a usage fee for a usage amount of the mobility service.

In another aspect a system is provided for providing a mobility service to a plurality of groups, each including a plurality of users, comprising: a user terminal configured to receive mobility service request information from a specific user belonging to a specific group, transfer the request information to a server, and receive mobility service matching information from the server; and the server configured to register the specific user as a user of the specific group, connect to a user terminal used by the specific user through network means, receive the mobility service request information from the user terminal, instruct an autonomous driving vehicle capable of the mobility service to provide the mobility service, and provide the mobility service to the user of the group within a usage limit of the specific group.

In some or more embodiments, the system may further comprise an autonomous driving vehicle configured to provide the mobility service to the specific user at a request for the mobility service from the server.

In some or more embodiments, the server may assigns the usage limit to a specific individual user or a specific group according to a contribution, prepayment fee, or membership fee paid by the specific group.

In some or more embodiments, the server may receive requests for a mobility service from a plurality of user terminals in which a respective start area, and a respective destination area are indicated and provides a mobility service such that a plurality of users board a specific autonomous driving vehicle together and travel, and preferentially matches those who have requested a mobility service corresponding to a start area of a certain range and a destination area of a certain range.

In another aspect a method is provided for providing a mobility service to a plurality of users, comprising: a user terminal configured to receive mobility service request information from a specific user, transfer the request information to a server and receive mobility service matching information from the server; the server configured to register the specific user as a user of the specific group, connect to a user terminal used by the specific user through network means, receive the mobility service request information from the user terminal, instruct a vehicle capable of the mobility service to provide the mobility service, and provide the mobility service to the user within a usage limit of the specific user; and an autonomous driving vehicle configured to receive the mobility service request and autonomously travel to provide the mobility service to the user.

In another aspect a method for providing a mobility service to a plurality of users, comprising: registering, by a server, a plurality of persons as users of the mobility service; receiving, by a server, a request for the mobility service from a user terminal of a specific user; instructing, by the server, a specific autonomous driving vehicle to provide the mobility service; providing, by the specific autonomous driving vehicle, the mobility service; and providing, by the server, the mobility service to the specific user within a usage limit of the specific user.

In some or more embodiments the server may receive requests for a mobility service from a plurality of user terminals in which a respective start area and a respective destination area are indicated and provides a mobility service such that a plurality of users board a specific autonomous driving vehicle together and travel, and preferentially matches those who have requested a mobility service

### Advantageous Effects

According to the present invention, it is possible to provide an efficient mobility service by receiving contributions or use fees from a large number of groups and using an autonomous driving vehicle for a user belonging to a group.

According to the present invention, a number of companies, universities, local governments, and the like can jointly purchase a vehicle and provide a mobility service necessary for commuting of employees, students, and traveling welfare of citizens.

Companies and groups can solve the uncomfortable commute problems of employees, and use a smaller parking lot than existing ones to effectively utilize the land.

Governments or local governments using the mobility service can provide an efficient mobility service by providing a call-based mobility service through autonomous driving vehicles instead of regular public transportation in areas with low traffic demand.

Users can save costs for purchase and management of their own autonomous driving vehicle and can efficiently use a mobility service as one needs using a vehicle which is jointly purchased by multiple persons.

### Brief Description of Drawings

The above and other objects, features and advantages of the present invention will be more apparent from the following detailed description taken in conjunction with the accompanying drawings, in which:
FIG. 1 is a schematic diagram of an autonomous driving vehicle providing a mobility service;
FIG. 2 is a schematic diagram of a user terminal for calling a mobility service;
FIG. 3 is a schematic diagram of a mobility service for a plurality of organizations and users; and
FIG. 4 is a schematic diagram of a mobility service for preferentially matching a start area and a destination area.

### [Reference Signs List]

- 100:: vehicle
- 200:: user terminal
- 300:: server
- 400:: A2A vehicle sharing matching

### Best Mode

### Mode for Invention

In the whole specification, the 'vehicle' is a means of transportation that serves to provide a service to transport people.

In the whole specification, the 'autonomous(self) driving vehicle' refers to a vehicle that drives and moves by itself in order to carry people or objects without driver intervention.

In the whole specification, the user group refers to an organization that bears funds, membership fees, or usage fees for mobility services of utilizing autonomous vehicles and owns a usage limit of mobility services. Here, the organization is not limited to only legally binding organizations and includes any groups such as family members, clubs, and alumni associations.

In the whole specification, the 'usage limit' refers to a limit of the right to use the mobility service provided to the user group or the user. The usage limit can be operated by the number of times, distance, and use time, or it can be operated as a numerical point that can be calculated based on various effects.

In the whole specification, the, 'usage amount' refers to the size of the mobility service provided to a specific user or a specific user group. It can be displayed by distance, number of times, etc., or by points.

In the whole specification, the 'providing a mobility service to a user group' means the offer of the mobility service for the user belonging to a specific user group who has been given the user limit.

The usage limit can be assigned in response to a specific period such as year, month, week, day, time, etc., or only for a specified period.

In the whole specification, the 'point' is a name used to indicate the usage limit or the usage of the mobility service in a numerical manner calculated based on various effects of the mobility service. In the actual service, it can be used in units such as mileage or currency, but it is regarded as a point method to display the usage limit and the usage of the mobility service based on numerical values.

When the usage limit is operated in the point method, it is easy to calculate the usage amount of various mobility services as the point and provide the mobility service within the usage limit, or convert it into the use fee by accumulating the amount of the mobility service as the point.

In the whole specification, the 'mobility service ' refers to a service that uses the vehicle to move moving objects such as people, animals, and objects from the origin to the destination.

In the whole specification, the 'server' transmits and receives data to and from a vehicle, a user terminal, and the like by network means, matches the mobility service and instructs the vehicle to provide the mobility service according to a user's request.

In the whole specification, the 'organization' refers to an organization registered on the server in order to provide the mobility service to multiple users.

In the whole specification, the 'user' refers to a subject who requests the mobility service and receives the mobility service. Even if the actual user moves, the user is regarded as receiving of the mobility service even if the object desired by the user moves in a desired section.

In the whole specification, the 'user of the organization' refers to a user who can use the mobility service provided to the organization (group). When a company is an organization, the 'user of the organization' may be an employee or a special customer of the company. If the school is an organization, the employer of the group may be a staff member or a student attending school. When the local government is an organization, the user may be a user who has an address in the local government or a visitor who has visited the local government for tourism. This may also be the family of members of a particular organization.

Embodiments of the present invention will be described below.

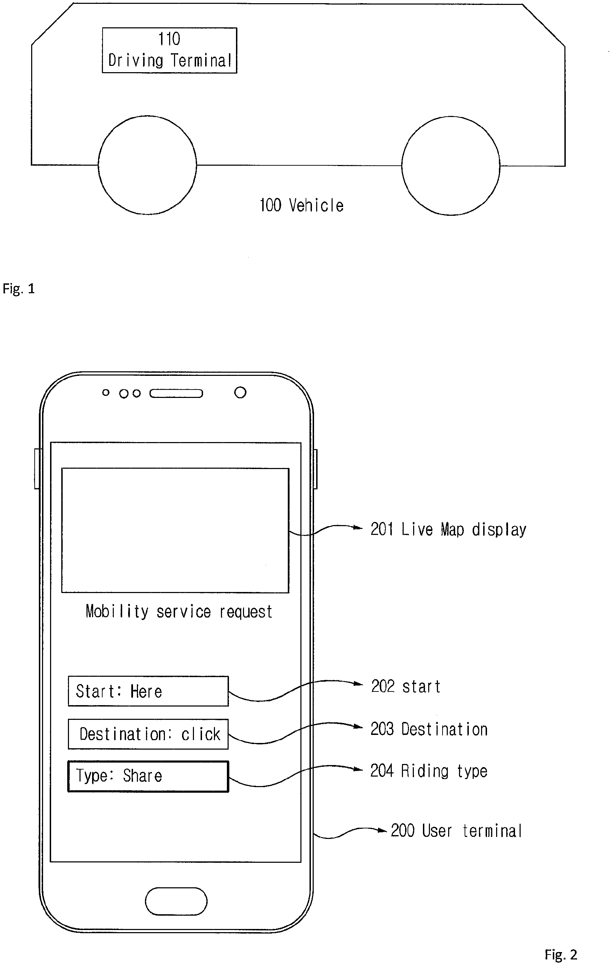

FIG. 1 is a schematic diagram of a vehicle (100) providing a mobility service.

The vehicle (100) is an autonomous driving vehicle that does not require a driver, and the driving module (110) directly serves to present a traveling route that matches a driving schedule where the vehicle (100) should drive.

The vehicle (100) includes a driving module (110) connected to a server through a network means. The driving module (110) is implemented with a SW that acts as a driving module in HW, such as a smart phone, a tablet PC, a PC, or a laptop PC, or a separately developed hardware terminal connected to a vehicle.

The driving module (110) may be configured as a single device, but if necessary, may be configured by a plurality of independent devices that are linked to one another to perform functions.

Even if the driving module (110) is configured as an accessory of the vehicle (100), the driving module (110) is connected to a server (300) through a network means, and when receiving a command for providing a mobility service from the server (300), the driving module (110) may perform an autonomous driving function to provide a mobility service.

The driving module (110) is provided with means for location determination, such as GPS, object recognition in a precision map, and the like, and frequently transmits location information to the server (300).

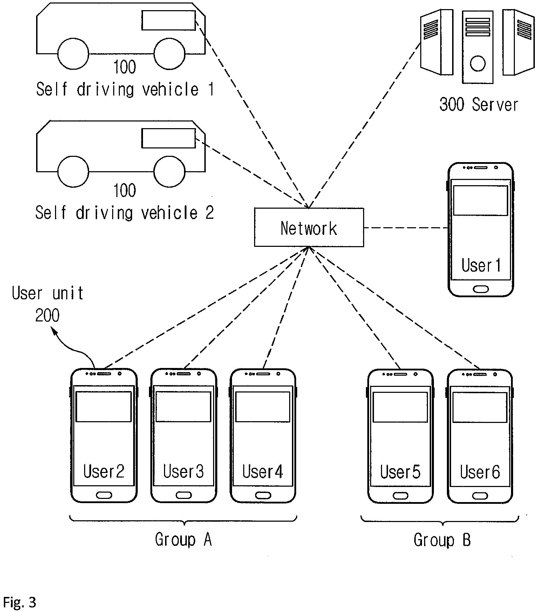

In FIG. 3, the server (300) is configured with a single server or with multiple servers to distribute functions to the multiple servers. When performing functions with multiple servers, the servers are connected to one another using network means to transmit and receive data efficiently.

In FIG. 3, user 2, user 3, and user 4 are registered as users in group A, and user 5 and user 6 are registered as users in group B. Also, a user terminal of User 1 not belonging to any group is included.

The server (300) installs and operates an operating system such as Linux and Windows, and software such as a web daemon and DB, and develops, installs, and executes a separate SW for providing mobility services.

The server (300) builds a database and registers and manages a plurality of groups as a mobility service user group.

The server (300) manages a plurality of users to use the mobility service as belonging to a specific group.

The server (300) registers and manages a plurality of users as independent personal mobility service users.

The server (300) designates a manager for each group, and when the manager of a special group approves his/her user, registers and manages the user as a service user of the specific group

The server (300) provides a user group with a usage limit for the mobility service, which is determined based on usage fees previously paid or funds contributed by the specific user group.

The server (300) provides an individual user with a usage limit for the mobility service based on usage fees previously paid or funds contributed by the individual user.

The server (300) implements an interface such that a manager of a specific group divides and specifies the usage limit of a group to users belonging to the group. It is possible to automatically distribute the usage limit to users belonging to the group according to the users' ranks or priorities in dividing the usage limit of a specific group by the manager.

When the usage limit of a specific group is divided and provided to users belonging to a group, the server (300) provides a mobility service only within the user's corresponding usage limit.

The server (300) may determine the usage limit in unit period in which the usage limit is provided to the individual user or the user of the user group. That is, it is possible to specify the usage limit for a specific period, such as 1 month, 3 months, 6 months, 1 year, 2 years or 5 years, when to when, or a specific month or year.

It is also possible that the server (300) does not specify a specific period of time to provide a usage limit to a specific group(organization), an individual user, or a user of a specific group.

When the server (300) provides the usage limit to a specific group, an individual user, or a user of a specific group in multiple times, the server (300) may increase the usage limit by adding.

It is preferable that the server (300) provide a map service and a real-time navigation service in order to provide a smooth service to the user terminal (200).

The server (300) may provide an independent service in providing a map service or a real-time navigation service, and it is also possible to use the map and navigation service already available.

The server (300) configures a function of managing the current or start area or destination area of the mobility service of the user who calls the mobility service.

The server (300) has a function of measuring an estimated time required for traveling on a road for a plurality of start areas requested for the mobility service to provide a mobility service.

The server (300) manages the delay and average speed on the road by figuring out a location movement state of the vehicle (100) or the user terminal (200) which is currently driving on the road and predicts the time required to travel between the areas therefrom.

FIG. 2 is a user terminal for calling a mobility service. A user terminal is preferably configured as a mobile device capable of transmitting and receiving data to and from a server through network communication.

The user terminal may be served by operating the SW that performs the user terminal on a separately designed HW device.

In addition, the user terminal may be operated by installing and executing a software that performs functions of the user terminal in a portable terminal such as a mobile phone, a smart phone, a laptop PC, or a tablet PC.

When the user terminal (200) is used based on an existing widely used terminal device such as a smart phone, tablet PC, laptop PC, or the like, it is possible to create an app such as an Android or Apple app and upload the app in an app market to allow the user to download and use the app.

The user terminal (200) requests the mobility service to the server (300) when mobility service request information such as a start area or destination area is input from the user. The request for the mobility service is performed by transmitting the mobility service request information.

The mobility service request information may further include additional information such as whether to allow sharing, a desired departure time, and a desired arrival time.

The request information for the mobility service may further include information requesting a restriction on the sharing according to gender or age group.

When the server (300) receives a request for a mobility service from the user terminal (200), the server (300) allocates a vehicle (100) capable of optimal mobility service and instructs the vehicle (100) to provide a mobility service to the user.

When the server (300) instructs the specific vehicle (100) to provide the mobility service to a specific user, the mobility service instruction information including the start and destination areas is transmitted.

When a desired departure time is indicated in the mobility service request information, and a requested time is not the current time, the server (300) stores the desired departure time in a DB as reservation information, allocates a vehicle to provide the mobility service at a corresponding time, and instructs the mobility service.

When the vehicle (100) receives an instruction to provide a mobility service to a specific user from the server (300), the vehicle (100) provides a mobility service of moving to the start area according to the instruction of the server (300), picking up the user, moving to the destination area, and dropping off the user.

The server (300) transmits location information received from the vehicle (100) to the user terminal of the user while the user is waiting for the mobility service or receiving the mobility service.

When the user terminal (200) receives the location information of the vehicle (100) from the server (300), the user terminal (200) provides a service for displaying the current location to the user using the location information.

When the individual user uses the mobility service, the server (300) manages the usage limit by subtracting the provision amount of the mobility service from the usage limit of the individual user or accumulating the usage amount and provides the mobility service to the user within the usage limit.

When the individual user uses the mobility service, the server (300) calculates a fee corresponding to the usage amount of the individual user and charges the user.

When the user of a specific group uses the mobility service, the server (300) calculates a fee corresponding to a single case or an accumulated usage amount and charges the group.

The server (300) charging a usage fee to a party, such as an individual user or a group, is configured in a first method of transmitting a digital invoice indicating the usage fee or digital information including the usage fee to the party, a second method of requesting payment for the usage fee from a bank account of a registered bank, and a third method of making a payment with points and digital currency held by the party.

The method of assigning a usage limit to a user group in the server (300) may be optionally set by selecting a method of assigning a usage limit with respect to a fund provided by a specific user group, a method of assigning the usage limit with respect to a usage fee prepaid by the user group, a method of assigning a usage limit with respect to a membership fee paid by a user group, and a method of assigning a usage limit as a reward for the user's advertisement viewing or online activities, or the like.

The server (300) specifies and uses a usage limit provided to the user group in a single system such as the number of usages and the moving distance. In this case, the user can use the mobility service using the number of usages or the moving distance as limits.

The server (300) may adopt a method for points, which are quantified to evaluate a complex mobility service according to the usage limit of the usage limit of the user group, and calculates the usage amount for the mobility service in the unit of points, thus achieving development into a more sophisticated system.

The server (300) specifies a usage limit according to a fund, a membership fee, a prepayment fee, an online compensation, or the like to the user group in point-based manner.

The server (300) may determine a usage amount by applying a value of complex movement by introducing the point-based technique. That is, the usage amount is calculated differentially according to the number of times the mobility service is used, a distance traveled, a call time, a usage section, the number of sharing passengers, a distance traveled with car sharing, and the time delayed due to car sharing.

The server (300) calculates a usage amount for multiple users who use the mobility service of the same distance by varying a weight such as increasing a usage amount according to the number of uses, increasing a usage amount at time when there are many calls, or increasing a usage amount when it passes a congestion section.

The server (300) gives a usage limit in the form of numeral points, and whenever the mobility service is used, perform subtraction from remaining usage points, or perform reflection in the accumulated usage amount to provide the mobility service within the usage limit.

The server (300) provides information on the remaining usage limit available to a specific user or a user of a specific group through a user terminal, and when the accumulated usage amount exceeds the usage limit or the remaining usage limit is zero after subtraction, may not provide the mobility service any more or give a warning to provide a mobility service within the usage limit.

The server (300) provides a mobility service exceeding the usage limit to a specific group or a specific user, and additionally charges the specific group or the specific user for a usage fee for a mobility service.

The server (300) increases and provides the weight of usage points in order to induce car sharing at a time when there is a high degree of congestion such as rush hour.

In order for the server (300) to induce car sharing, the server (300) allows the user terminal (200) to input information related to the car sharing. The car sharing information may optionally include whether to share a vehicle, an allowable delay time for car sharing (1 minute, 5 minutes, 10 minutes, 20 minutes, or the like) and a car-sharing by gender option.

The server (300) manages the gender information of individual users, and if there is a car-sharing by gender option, determines a sharing schedule in consideration of the gender of the user.

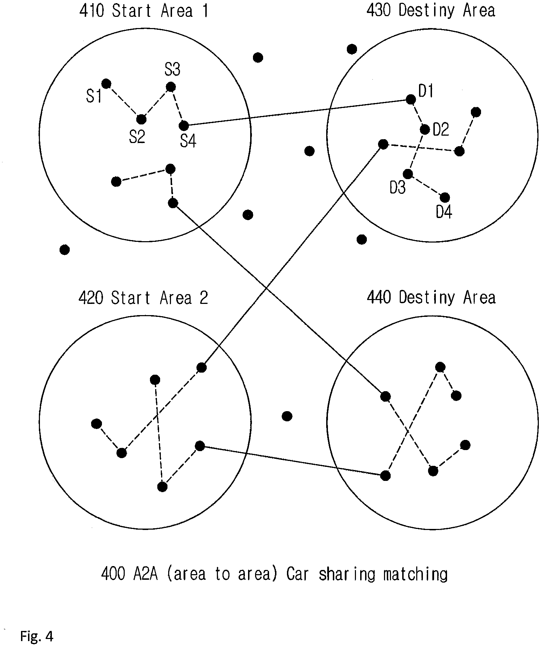

FIG. 4 is a schematic diagram of an A2A model matching an area to area car sharing.

When a plurality of mobility service requests are received in the start area 1 (410) and the start area 2 (420), the server (300) designs boarding procedure and de-boarding procedure for a plurality of calls having similar destination areas and start areas.

The server (300) configures an area-to-area (A2A) mobility service matching service in which people moving from a specific start area to a specific destination area can preferentially share a car for a plurality of mobility service calls.

The A2A matching service is a matching technique that induces a car sharing between mobility service callers having similar start areas located within a certain range and similar destination areas within a certain range.

The certain range may use a method of determining by a specified distance, and may also be determined by a time delay in moving between points.

The server (300) determines a certain range by distance in such a way of setting a start area within a radius of 1 km and a destination area within a radius of 0.5 km, or the like.

It is preferable that the server (300) determines a certain range based on the delay time of car sharing for a mobility service caller in the adjacent area of the start area, starting from the time taken for a vehicle to move from a specific start area and a specific destination area. The certain range may be determined to be a start area within 3 minutes and a destination area within 5 minutes, or within 8 minutes of departure and arrival.

The server (300) calculates the delay time of car sharing in the start area of a certain range to be the time taken for the vehicle to move to a start area of another caller and pick up the caller or to load a delivery object. In addition, it is possible to calculate the delay time by adding the time exceeded due to the change of the route for the car sharing.

The server (300) calculates the delay time of car sharing in the destination area to be the time taken for the vehicle to move to a destination area of another caller and drop off the caller or to unload a delivery object. In addition, it is possible to calculate the delay time by adding the time exceeded due to the change of the route for the car sharing.

It is preferable that the server (300) determines the delay time of car sharing for a mobility service caller in the adjacent area of the destination point starting from the time taken for a vehicle to move from a specific start area and a specific destination area.

The server (300) allows a plurality of users to match in the car sharing within an allowable delay time received from a user.

The server (300) may determine a valid time of the delay time according to the car sharing in adjacent areas for a plurality of mobility service calls, and induce a person or delivery object matched within the valid time to board the car for car sharing.

The server (300) assigns a vehicle that satisfies a best car sharing condition for a specific user's mobility service request and transmits the corresponding information to the user's user terminal.

When searching for a plurality of cars that can be matched to a request for a mobility service of a specific user, the server (300) transmits information on an expected delay time and an expected usage amount for each vehicle to the user terminal.

When a user selects a specific vehicle from the plurality of vehicles using a user terminal, the server (300) provides a matching service to the selected vehicle.

The server (300) reduces the usage amount of the mobility service as the number of car sharing-occupants increases to actively induce car sharing in the congestion time and congestion section.

The server (300) is provided with a means for separately setting a manager of a specific group and allowing the manager to manage information on users belonging to the specific group.

The manager service of a specific group of the server (300) is configured with a web service or a client/server model.

The server (300) divides the usage limit of the mobility service of the specific group according to the request of the manager of the specific group so as to be assigned to the users.

The server (300) allows a manager of a specific group to specify a usage limit by each user belonging to the specific group.

When the users belonging to a specific group use the mobility service, the server (300) manages the usage amount of the mobility service in a way of calculating the usage mount of the mobility service, subtracting the usage amount from a usage limit of the specific group, and charging a fee to the specific group or accumulating the usage amount of the specific group.

The server (300) imposes a usage fee for an accumulated usage amount of a specific group.

It is necessary for the server (300) to reflect when the usage time is in calculating the usage amount of the mobility service. In other words, when the user calls the mobility service during congestion time such as rush hour, the usage amount is largely appropriated.

The server (300) discriminately calculates a usage amount according to a traveling section in the case of passing through a difficult section such as an urban section, an accident-prone area, a toll road, a hill, or a curved road.

The server (300) discriminately appropriates a usage amount by reflecting the number of individuals who share a car, a travel time increased due to car sharing, and a time taken due to the car sharing.

In the server (300) discriminately appropriating the usage amount according to the degree of congestion, the usage fee is calculated by reflecting the degree of congestion even when there are many mobility service request calls per unit time in addition to a method of simply setting the commute time.

The server (300) preferably calculates a different usage amount for situations in which the degree of congestion is greater even through it is not rush hour but is for events such as festivals or concerts in regions.

The server (300) provides mobility services to users belonging to a specific group within the usage limit specified for the specific group.

The server (300) provides mobility services to the individual users within the usage limit specified for the individual users.

The server (300) transfers a certain usage amount to another user or another group according to some or all of a usage limit held by a specific user or a specific group.

When a specific user requests the server (300) to transfer his or her usage amount to another user or group, the server (300) transfers the corresponding usage amount.

The server (300) separately configures a service for a user with manager authority. The manager provides information services to systematically list and view mobility service usage amount or usage limit by each registered organization.

The server (300) provides a service in which a manager designates or un-designates a manager of a specific group.

The server (300) constitutes an information service and a management service for a manager of a specific group.

The server (300) allows a manager of a specific group to view current status information of individual usage amount for the mobility service of each of users of the specific group.

When a specific manager of a specific group requests the server (300) to transfer the usage amount of the specific group to another user or group, the server (300) transfers the corresponding usage amount.

The server (300) provides a service to allow a specific user who has a lot of usage amount left to sell a certain usage amount, and transfers the usage amount to a specific user who wants to purchase the usage amount.

When a specific user belongs to a plurality of groups, the server (300) allows the user to use a mobility service by assigning priorities to the usage limits of a plurality of groups such that a user can systematically use the usage limits of the plurality of groups.

That is, the user determines usage priorities for a plurality of groups, such as the first priority and the second priority, and the server (300) allows the user to use the usage limit of each group according to the higher priorities.

When a specific user is a user of a plurality of groups or a user who personally has a separate usage limit, the server (300) allows the user to classify usage limits and set priorities, and use the mobility service according to the priorities of the usage limits.

When an individual user provides a contribution, a membership fee, and a prepayment fee, the server (300) may specify a user group including one person to provide a usage limit.

The server (300) discriminately calculates the usage amount of the mobility service provided to a specific user according to characteristics. It is a method that manages a service for a distance that the user has moved by calling it M-point and separately manages a usage amount for a matching service for responding to the user's mobility service request by calling it C-Point.

In the present invention, an example in which points are used as two types of M-point and C-point is described, but if necessary, it is possible to apply a method for setting and operating more types of points and calculating a usage fee for point types, or specifying the target of points used within the usage limit.

The server (300) allows specific points to be used within a usage limit of a specific user group or a specific individual user for points of each mobility service, and other points to be used in a manner of paying a usage fee.

The server (300) applies a method for calculating a usage amount by varying a weight according to usage amount sections of a mobility service of a specific user or a specific group.

The server (300) provides each user with a usage limit for each period. In other words, it is configured in a manner that specifies a usage limit that can be used within a specified unit period such as 1 week, 1 month, 3 months, 6 months, or the like.

The method of calculating the usage amount of the specific user group or the specific user for the mobility service provided to the specific user group or the specific user in the server (300) is differently applied according to the accumulated usage amount in the unit period.

When the server (300) assigns a total of 9000 points as a usage limit of a specific user group or a specific user, the server (300) applies the usage weight of 1 time when the accumulated usage amount is less than 3000 points, which is the first phase, applies the usage weight of 1.5 times when the accumulated usage amount is greater than 3000 points and less than 6000 points, which is the second phase, and applies the usage weight of 2.5 times when the accumulated usage amount is greater than and equal to 6000 points, which is the third phase.

Alternatively, the usage amount can be applied by lowering the weight for an existing prepayment fee or contribution, and increasing the weight for an exceeded usage amount.

When the server (300) assigns a greater usage amount calculation ratio whenever the usage amount is increased in the above manner, there is an effect that each user or each user's user group pays more fund or prepayment fee.

The server (300) registers a user, provides a mobility service at a user's request, and charge a user group to which the user belongs for a usage fee of the mobility service with respect to the usage amount of the mobility service.

When charging the usage fee for the usage amount of the mobility service by users belonging to a specific group, the server (300) requests payment using an online account or a card specified by the user group, or requests payment using points or virtual currency previously accumulated by the user group, or sends a document that charges a relevant manager of the user group for the usage fee through an e-mail or mail.

### Industrial Applicability

The present applicant has been studied the service model of autonomous vehicle and intends to promote a business that resolves the commute and congestion experienced in most cities through the mobility services for employees of businesses and citizens of local governments, by forming cooperatives in which companies and local governments participate.

In most industrial zones, since there is a lack of sufficient public transportation, the employees commute by vehicles thereof. Most of the commuters in the car are the cause of traffic jams because a single person travels in one car. Local governments are injecting buses into these industrial complexes by paying taxes, but they are crowded only during commute hours and there are fewer users during regular hours, which is a waste of taxes.

The present applicant will develop a mobility service matching platform in which Daejeon City's corporations and Daejeon City jointly participate and use the autonomous driving vehicles to jointly provide welfare-type mobility services. In other words, the present applicant intends to provide the company's commuting and welfare service during the commute time and the mobile welfare service for the underprivileged (the marginalized area, the elderly) after work.

## Claims

1. A method for providing a mobility service to multiple groups and multiple users subscribing to each of the groups, comprising:
receiving, by a server, a request for the mobility service from a user terminal of a specific user of a specific group;
instructing, by the server, a specific autonomous driving vehicle to provide the mobility service; and
providing, by the specific autonomous driving vehicle, the mobility service to the specific user,
wherein the server provides the mobility service to the specific group or the specific user within a usage limit, or wherein the server charges the specific group for a usage fee for a usage amount of the mobility service.,

2. The method of claim 1, further comprising assigning, by the server, the usage limit to a specific individual user or a specific group according to a contribution, prepayment fee, or membership fee paid by the specific group.

3. The method of claim 1 or 2, further comprising dividing, by the server, the usage limit of the specific group for the mobility service into usage limits of users of the specific group and assigning the usage limits to the users.

4. The method of any one of claims 1 to 3, further comprising transferring, by the server, some or all of the usage limit of the specific group or the specific user to another user or another group.

5. The method of any one of claims 1 to 4, further comprising calculating, by the server, a usage amount of a mobility service provided to a specific user in consideration of at least one of a usage time of the mobility service, a delay time due to car sharing, a number of car sharing passengers, a traveling distance, a traveling section, a congestion degree, or a usage time band.

6. The method of any one of claims 1 to 5, wherein the server receives requests for a mobility service from a plurality of user terminals in which a respective start area and a respective destination area are indicated and perform matching for the mobility service such that a plurality of users board a specific autonomous driving vehicle together and travel.

7. The method of any one of claims 1 to 6, further comprising providing, by the server, usage information of users for the mobility service belonging to the specific group to a specific user specified as a manager of the specific group.

8. The method of any one of claims 1 to 7, wherein the server receives requests for a mobility service from a plurality of user terminals in which a respective start area and a respective destination area are indicated and provides a mobility service such that a plurality of users board a specific autonomous driving vehicle together, and preferentially matches those who have requested a mobility service corresponding to a start area of a certain range and an destination area of a certain range.

9. The method of any one of claims 1 to 8, further comprising: registering, by a server, a plurality of persons as users of the mobility service.

10. A method for providing a mobility service to a plurality of users, comprising:
registering, by a server, a plurality of persons as users of the mobility service;
receiving, by a server, a request for the mobility service from a user terminal of a specific user;
instructing, by the server, a specific autonomous driving vehicle to provide the mobility service;
providing, by the specific autonomous driving vehicle, the mobility service; and
providing, by the server, the mobility service to the specific user within a usage limit of the specific user.

11. The method of claim 10, wherein the server receives requests for a mobility service from a plurality of user terminals in which a respective start area and a respective destination area are indicated and provides a mobility service such that a plurality of users board a specific autonomous driving vehicle together and travel, and preferentially matches those who have requested a mobility service corresponding to a start area of a certain range and an destination area of a certain range.

12. A system for providing a mobility service to a plurality of groups, each including a plurality of users, comprising:
a user terminal configured to receive mobility service request information from a specific user belonging to a specific group, transfer the request information to a server, and receive mobility service matching information from the server; and
the server configured to register the specific user as a user of the specific group, connect to a user terminal used by the specific user through network means, receive the mobility service request information from the user terminal, instruct an autonomous driving vehicle capable of the mobility service to provide the mobility service, and provide the mobility service to the user of the group within a usage limit of the specific group.

13. The system of claim 12, further comprising an autonomous driving vehicle configured to provide the mobility service to the specific user at a request for the mobility service from the server.

14. The system of claim 12 or 13, wherein the server is configured to assign the usage limit to a specific individual user or a specific group according to a contribution, prepayment fee, or membership fee paid by the specific group.

15. The system of any one of claims 12 to 14, wherein the server is configured to receive requests for a mobility service from a plurality of user terminals in which a respective start area, and a respective destination area are indicated and provides a mobility service such that a plurality of users board a specific autonomous driving vehicle together and travel, and preferentially matches those who have requested a mobility service corresponding to a start area of a certain range and a destination area of a certain range..
